# EUROPÄISCHE PATENTSCHRIFT

(11) **EP 2 867 639 B1**
(45) Veröffentlichungstag und Bekanntmachung des Hinweises auf die Patenterteilung: **11.01.2017**
(21) Anmeldenummer: 13725673.1
(22) Anmeldetag: 29.05.2013
(51) Int. Cl.: G01P 15/11, G01L 9/00, G01L 1/12, G01L 1/14

(54) **WIRBELSTROMSENSOR UND VERFAHREN ZUM MESSEN EINER KRAFT**
EDDY CURRENT SENSOR AND METHOD FOR MEASURING A FORCE
CAPTEUR DE COURANT DE FOUCAULT ET PROCÉDÉ DE MESURE D'UNE FORCE

(30) Priorität: 02.07.2012 DE 102012211416
(43) Veröffentlichungstag der Anmeldung: 06.05.2015
(73) Patentinhaber: Robert Bosch GmbH, 70442 Stuttgart (DE)
(72) Erfinder: ZINOBER, Sven, 71292 Friolzheim (DE); HAS, Remigius, 71120 Grafenau-Daetzingen (DE)
(86) Internationale Anmeldenummer: PCT/EP2013/061024
(87) Internationale Veröffentlichungsnummer: WO 2014/005769

(56) Entgegenhaltungen:
- EP-A1- 0 947 815
- EP-A1- 2 028 586
- WO-A2-03/048700
- DE-A1- 3 409 306
- DE-C1- 4 420 691

## Beschreibung

### Stand der Technik

Die vorliegende Erfindung bezieht sich auf einen Wirbelstromsensor sowie auf ein Verfahren zum Messen einer Kraft.

Die DE 10 2010 009 923 A1 beschreibt eine Wirbelstromsonde zur Abtastung einer flächigen Probe in einem Probenvolumen, in das die Probe einführbar ist und/oder eingeführt ist. Die Wirbelstromsonde weist Kerne auf, die auf gegenüberliegenden Seiten des Probenvolumens angeordnet sind. Mindestens einer der beiden Kerne ist zumindest abschnittsweise von einer Spule umwickelt.

Aus der DE 44 206 91 C1 ist eine Kraftmesszelle bekannt, bei der zur Verbesserung der Genauigkeit eines Wegesignals ein elastisch verformbarer Kraftaufnehmer zur Aufnahme der Gewichtskraft und eine induktive Sensoranordnung zur Erfassung der Kraftaufnehmer-Verformung sowie deren Umwandlung in ein elektrisches Wegesignal vorgesehen ist. Hierbei umfasst die Sensoranordnung ein induktives Sensorelement, welches benachbart zum Krafteinleitungsteil des Kraftaufnehmers gegenüber einem signalgebenden Teil so angeordnet ist, dass sich bei Belastung des Krafteinleitungsteils mit einer Kraft eine von dieser Kraft abhängige Änderung des Abstands zwischen dem Sensorelement und dem signalgebenden Teil aufgrund einer elastischen Verformung des Kraftaufnehmers ergibt, welches von dem Sensorelement erfasst und in das elektrische Wegesignal umgesetzt wird.

Aus der DE 34 09 306 A1 ist eine Messeinrichtung zum Bestimmen einer Differenz einer Impedanzänderung einer als Messspule dienenden Sensorspule und einer mit dieser Spule thermisch gekoppelten, als Referenzspuele dienenden Sensorspule bekannt. Die Messeinrichtung dient dabei zur Erfassung des Drucks eines flüssigen oder gasförmigen Mediums mit Hilfe einer relativ zu den beiden Sensorspulen feststehenden, jedoch druckabhängig auslenkbarem Membran als Messobjekt.

Aus der WO 03/04870 A2 ist ein Sensoraufbau mit flexiblen Wänden bekannt, der eine Messung abhängig von einer Verformung der flexiblen Wände ermöglicht.
Aus der EP 0 947 815 A1 ist ein differenzieller Druckmessumformer bekannt, der mikrotechnisch ausgeführt ist und eine durch ein Gehäuse definierte
Messkammer aufweist, die durch eine mit Magnetmitteln versehende Messmembran in einen mit einem ersten Messdruck beaufschlagten ersten Messraum und einen mit einem zweiten Messdruck beaufschlagten zweiten Messraum aufweist. Die Messmembran ist dabei derart angeordnet, dass eine Druckkraft des sich aus dem ersten und dem zweiten Messdruck ergebenden Differenzdrucks eine Auslenkung der Messmembran aus ihrer Ruhelage bewirkt. Die Struktur des Druckmessumformers umfasst ferner eine am Gehäuse angeordnete Spule aus stromleitendem Material, die mittels magnetischer Kraft mit den Magnetmitteln zusammenwirkt, um eine zwischen dem Gehäuse und der Messmembran wirkende Kraft zu erzeugen. Eine Auslenkungseinrichtung ist ferner zum Messen einer Auslenkung der Messmembran aus der Ruhelage und zum Erzeugen eines Auslenkungssignals vorgesehen, wobei in Abhängigkeit der Auslenkung eine elektrische Schaltungsvorrichtung zur Erzeugung eines Spulenstroms in Abhängigkeit des Auslenkungssignals vorgesehen ist, dass die über die Spule und die Magnetmittel auf dem Messmembran wirkende Kraft die auf die Messmembran wirkende Druckkraft im Wesentlichen kompensiert. Der Spulenstrom zur Erzeugung der magnetischen Kompensationskraft stellt ein Maß für den Differenzdruck dar und wird als Ausgangsgröße des Druckmessumformers ausgegeben.

### Offenbarung der Erfindung

Vor diesem Hintergrund wird mit der vorliegenden Erfindung ein als ein Differenzdrucksensor ausgeführter Wirbelstromsensor vorgestellt. Vorteilhafte Ausgestaltungen ergeben sich aus den jeweiligen Unteransprüchen und der nachfolgenden Beschreibung.

Zum Messen einer Kraft oder eines Drucks ist ein Gegenpart erforderlich, der einen definierten Widerstand gegen die zu messende Kraft oder den zu messenden Druck erzeugt. Dabei kann eine Auslenkung des Gegenparts erfasst werden und es kann über eine Federkonstante oder einen äquivalenten Stoffwert auf die zu messende Kraft bzw. Kraft pro Fläche (Druck) geschlossen werden. Ebenso kann über die Auslenkung, die Federkonstante und eine Masse des Gegenparts auf eine anliegende Beschleunigung geschlossen werden. Die Auslenkung des Gegenparts kann unmittelbar zum Messen eines Wegs erfasst werden.

Wirbelströme eignen sich zum Messen einer Auslenkung einer Oberfläche gegenüber einem Emitter, beispielsweise einer elektrischen Spule. Die Oberfläche kann gegenüber dem Emitter mittels einer Feder in Position gehalten werden und eine definierte Ruhelage einnehmen, wenn keine Kräfte auf die Oberfläche oder eine Rückseite der Oberfläche wirken. Wenn eine Kraft auf die Oberfläche oder die Rückseite der Oberfläche wirkt, wird die Feder elastisch verformt und eine Auslenkung der Oberfläche ist proportional zu der Kraft.

Ein Wirbelstromsensor weist die folgenden Merkmale auf:
eine elektrisch leitfähige Sensorspule zum Bereitstellen eines elektromagnetischen Wechselfelds;
eine Sensorfläche zum Beeinflussen des elektromagnetischen Wechselfelds, wobei die Sensorspule und die Sensorfläche beweglich zueinander angeordnet sind; und
ein Federelement, das mit der Sensorspule und der Sensorfläche gekoppelt ist und dazu ausgebildet ist, einer Relativbewegung zwischen der Sensorfläche und der Sensorspule mit einer Federkraft entgegenzuwirken.

Der als ein Differenzdrucksensor ausgeführte Wirbelstromsensor ist dazu ausgebildet, mittels dem Wirbelstromprinzip eine Messgröße in einem Messsignal abzubilden. Eine Sensorspule kann ein elektrischer Leiter sein, der in zumindest einer Windung angeordnet ist. Die Sensorspule kann eine Induktivität aufweisen. Die Sensorspule kann als Luftspule ohne Kern ausgeführt sein. Die Sensorspule kann als Flachspule in Form einer Spirale ausgeführt sein. Die Sensorspule kann auch als räumlich gewickelte Spule ausgeführt sein. Die Sensorspule kann von einem Wechselstrom durchflossen werden. Bei Stromfluss kann sich um die Sensorspule ein elektromagnetisches Wechselfeld aufbauen. Eine Sensorfläche kann eine elektrisch leitende Fläche sein, in der das elektromagnetische Wechselfeld der Sensorspule Wirbelströme induzieren kann. Die Wirbelströme können wiederum ein eigenes elektromagnetisches Wechselfeld bewirken, das dem Wechselfeld der Sensorspule entgegengesetzt ausgerichtet ist, also dem Wechselfeld entgegenwirkt. Die elektromagnetischen Felder beeinflussen sich gegenseitig und stehen zueinander im Gleichgewicht. Die Sensorfläche kann auch ein eigenes Magnetfeld aufweisen. Das Magnetfeld kann ebenfalls das Wechselfeld der Sensorspule beeinflussen. Die Sensorfläche kann eine vorbestimmte Masse aufweisen. Ein Federelement kann biegsam sein und eine Kraft proportional zu einer Auslenkung entgegen der Auslenkung aufbringen. Beispielsweise kann das Federelement eine biegsame Membran sein, an der die Sensorfläche oder die Sensorspule befestigt ist. Das Federelement kann auch eine Biegefeder sein. Das Federelement kann in einem Kraftfluss zwischen der Sensorspule und der Sensorfläche angeordnet sein. Das Federelement kann die Sensorfläche in einem Ruhezustand beabstandet zu der Sensorspule halten. Die Sensorfläche kann im Wesentlichen in Richtung einer Achse durch die Pole der Sensorspule beweglich angeordnet sein. Das Federelement kann beispielsweise eine Tellerfeder sein. Eine Kopplung kann eine Anordnung in einem festen Abstand sein. Beispielsweise kann die Sensorspule von einem Gehäuse in einer vorbestimmten Relativposition zu einer ersten Kante des Federelements gehalten werden. Eine zweite Kante des Federelements kann mit der Sensorfläche verbunden sein. Ein bedeutender Parameter der gegenseitigen Beeinflussung ist ein Abstand zwischen der Sensorspule und der Sensorfläche. Aufgrund der Beeinflussung kann eine Spannung an der Sensorspule einen Phasenversatz zu dem Stromfluss in der Sensorspule aufweisen. Durch die Beeinflussung kann sich eine für den Abstand zwischen der Sensorspule und der Sensorfläche charakteristische Impedanz der Sensorspule einstellen. Wenn sich ein Abstand der Sensorspule zu der Sensorfläche ändert, dann ändert sich auch eine Größe der Beeinflussung und somit die Impedanz der Sensorspule. Diese Änderung kann über die Sensorspule, beispielsweise über eine Impedanzmessung erfasst werden. Über die Änderung kann der Abstand der Sensorspule zu der Sensorfläche ermittelt werden. Durch die Beeinflussung kann sich ferner eine für den Abstand zwischen der Sensorspule und der Sensorfläche charakteristische Resonanzfrequenz eines die Sensorspule umfassenden Sensorschwingkreises einstellen. Ebenso kann sich durch die Beeinflussung eine für den Abstand zwischen der Sensorspule und der Sensorfläche charakteristische Güte des die Sensorspule umfassenden Sensorschwingkreises einstellen. Die Impedanz der Sensorspule, die Resonanzfrequenz des Sensorschwingkreises oder die Güte des Sensorschwingkreises bzw. eine beliebige Kombination davon kann unter Verwendung einer geeigneten Auswerteeinrichtung oder Messeinrichtung durch bekannte Verfahren bestimmt werden. Aus der Impedanz oder der Resonanzfrequenz oder der Güte jeweils für sich alleine oder in Kombination kann auf den Abstand zwischen der Sensorspule und der Sensorfläche geschlossen werden, beispielsweise unter Verwendung vorbestimmter Referenzwerte.

Die Sensorfläche ist feststehend ausgeführt und die Sensorspule ist dazu ausgebildet sein, die Relativbewegung auszuführen.

Der Wirbelstromsensor kann eine Auswertespule zum Erfassen einer Resonanzfrequenz und zusätzlich oder alternativ einer Güte eines die Sensorspule umfassenden Sensorschwingkreises aufweisen. Die Auswertespule kann in einem Einflussbereich der Sensorspule angeordnet sein. Die Auswertespule kann induktiv mit der Sensorspule gekoppelt sein. Über eine Auswertespule kann die Sensorspule drahtlos überwacht werden. Die Auswertespule kann in einem Bereich außerhalb eines Einflussbereichs der Sensorfläche angeordnet sein. Dann kann die Veränderung des elektromagnetischen Wechselfelds ohne Beeinflussung der Messung erfasst werden. Der Sensorschwingkreis kann neben der Sensorspule eine Parasitärkapazität der Sensorspule umfassen. Zum Erfassen der Resonanzfrequenz und zusätzlich oder alternativ der Güte des Sensorschwingkreises kann ein elektrisches Wechselsignal, beispielsweise ein Wechselstrom, an die Auswertespule angelegt werden. Durch eine induktive Kopplung zwischen der Auswertespule und der Sensorspule kann der die Sensorspule umfassende Sensorschwingkreis zu Schwingungen angeregt werden. Dadurch kann sich ein Wechselstrom durch die Sensorspule ausbilden. Durch eine Änderung der Frequenz des an die Auswertespule angelegten elektrischen Wechselsignals kann die Resonanzfrequenz des Sensorschwingkreises ermittelt werden. Dadurch kann beispielsweise eine Größe eines durch die Sensorspule fließenden Wechselstroms ausgewertet werden. Die Resonanzfrequenz ist abhängig von einem Abstand zwischen der Sensorfläche und der Sensorspule. Dabei variieren neben der Gegeninduktivität auch die ohmschen Verluste durch den Plattenabstand, also dem Abstand zwischen der Sensorfläche und der Sensorspule. Somit kann unter Kenntnis der Resonanzfrequenz und zusätzlich oder alternativ unter Kenntnis der Güte auf den Abstand zwischen der Sensorfläche und der Sensorspule geschlossen werden.

Die Sensorspule kann elektrische Anschlüsse zum Erfassen einer Impedanz der Sensorspule aufweisen. Die elektrischen Anschlüsse können zum Anlegen eines zur Erfassung der Impedanz geeigneten elektrischen Wechselsignals, beispielsweise eines Wechselstroms, an die Sensorspule dienen. An den elektrischen Anschlüssen kann eine Spannung und/oder ein Stromfluss in der Sensorspule abgegriffen werden. Eine Einrichtung zum Auswerten kann ein Signal erzeugen, das die Impedanz repräsentiert. Die Impedanz ist abhängig von einem Abstand zwischen der Sensorfläche und der Sensorspule. Somit kann unter Kenntnis der Impedanz auf den Abstand zwischen der Sensorfläche und der Sensorspule geschlossen werden.

Der Wirbelstromsensor kann eine benachbart zu der Sensorspule angeordnete Referenzspule zum Bereitstellen eines Referenzfelds aufweisen. Weiterhin kann der Wirbelstromsensor eine benachbart zu der Sensorfläche angeordnete Referenzfläche zum Beeinflussen des Referenzfelds aufweisen. Die Referenzspule und die Referenzfläche können starr zueinander angeordnet sein. Durch eine Referenzspule und Referenzfläche können Umwelteinflüsse, wie Temperaturgang und elektromagnetische Störfelder kompensiert werden. Durch Referenzelemente kann der Wirbelstromsensor abgeglichen werden.

Der Wirbelstromsensor kann ein Gehäuse aufweisen, das eine Schnittstelle zum Befestigen des Wirbelstromsensors aufweist, wobei das Federelement, die Sensorfläche und alternativ oder ergänzend die Sensorspule in dem Gehäuse angeordnet sind. Durch ein Gehäuse kann der Wirbelstromsensor an einem Messpunkt sicher befestigt werden. Das Gehäuse kann die Bestandteile des Wirbelstromsensors zu einer leicht verwendbaren Einheit zusammenfassen. Das Gehäuse kann beispielsweise ein empfindliches Federelement vor schädlichen Einflüssen schützen.

Zwischen der Sensorspule und der Sensorfläche kann ein Gel angeordnet sein. Das Gel kann elektrisch isolierend sein. Das Gel kann beispielsweise einen Druck hydrostatisch weiterleiten. Das Gel kann elektrisch nichtleitend sein. Durch das Gel können Fremdkörper aus einem Zwischenraum zwischen der Sensorspule und der Sensorfläche ferngehalten werden.

Die Relativbewegung kann eine Kippbewegung sein. Die Kippbewegung kann beispielsweise über eine Wippe auf die Sensorspule oder die Sensorfläche übertragen werden. Beispielsweise kann die Wippe das Federelement, die Sensorspule oder die Sensorfläche und eine Wirkfläche umfassen. Die Wirkfläche kann beispielsweise von einem Medium beaufschlagbar angeordnet sein, während das Federelement eine Sensorkavität des Wirbelstromsensors von dem Medium abschirmt.

Der Wirbelstromsensor kann eine weitere Sensorspule aufweisen, die starr mit der Sensorspule gekoppelt ist. Der Wirbelstromsensor kann eine weitere Sensorfläche aufweisen, die starr mit der Sensorfläche gekoppelt ist. Durch weitere Bauteile, die das elektromagnetische Wechselfeld beeinflussen, kann ein Signal in der Sensorspule verstärkt werden.

Der Wirbelstromsensor kann eine weitere elektrisch leitfähige Sensorspule zum Bereitstellen eines weiteren elektromagnetischen Wechselfelds aufweisen. Weiterhin kann der Wirbelstromsensor eine weitere Sensorfläche zum Beeinflussen des weiteren elektromagnetischen Wechselfelds aufweisen, wobei die weitere Sensorspule und die weitere Sensorfläche beweglich zueinander angeordnet sind. Der Wirbelstromsensor kann ein weiteres Federelement aufweisen, das mit der weiteren Sensorspule und der weiteren Sensorfläche gekoppelt ist oder durch die weitere Sensorfläche gebildet wird, und dazu ausgebildet ist, einer weiteren Relativbewegung zwischen der weiteren Sensorfläche und der weiteren Sensorspule mit einer weiteren Federkraft entgegenzuwirken. Durch eine weitere Messeinheit in dem gleichen Wirbelstromsensor kann eine Redundanz erzeugt werden, die zu einer erhöhten Messsicherheit führt. Dann kann der Wirbelstromsensor auch bei einem Defekt an einer der Messeinheiten funktionsfähig bleiben.

Die Erfindung wird nachstehend anhand der beigefügten Zeichnungen beispielhaft näher erläutert. Es zeigen:
- Fig. 1: ein Blockschaltbild eines Wirbelstromsensors gemäß einem Ausführungsbeispiel der vorliegenden Erfindung;
- Fig. 2: ein Ablaufdiagramm eines Verfahrens zum Messen einer Kraft gemäß einem Ausführungsbeispiel der vorliegenden Erfindung;
- Fig. 3: ein Diagramm einer Verschiebung der Resonanzfrequenz bei einer Änderung eines elektromagnetischen Wechselfelds gemäß einem Ausführungsbeispiel der vorliegenden Erfindung;
- Figuren 4a und 4b: schematische Abbildungen eines Wirbelstromsensors als Differenzdrucksensor in Brückenbauart gemäß einem Ausführungsbeispiel der vorliegenden Erfindung in unbeaufschlagten Zustand und in beaufschlagtem Zustand;
- Figuren 5a und 5b: schematische Abbildungen eines Wirbelstromsensors als Differenzdrucksensor in Brückenbauart mit einer zweiten Sensorspule gemäß einem Ausführungsbeispiel der vorliegenden Erfindung in unbeaufschlagten Zustand und in beaufschlagtem Zustand;

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

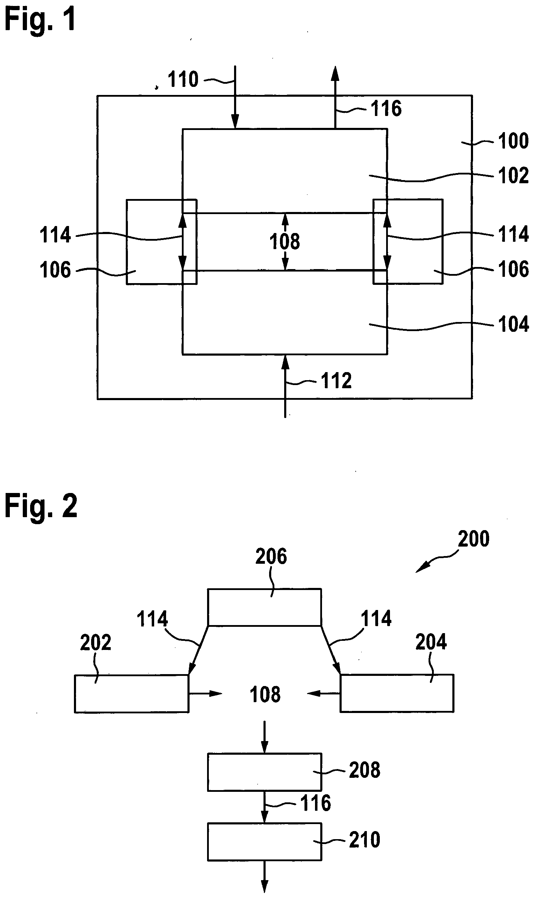

Fig. 1 zeigt ein Blockschaltbild eines als ein Differenzdrucksensor ausgeführten Wirbelstromsensors 100 gemäß einem Ausführungsbeispiel der vorliegenden Erfindung. Der Wirbelstromsensor 100 weist eine Sensorspule 102, eine Sensorfläche 104 und ein Federelement 106 auf. Die Sensorspule 102 ist eine elektrisch leitfähige Spule zum Bereitstellen eines elektromagnetischen Wechselfelds 108, wenn die Sensorspule 102 von einem Wechselstrom 110 durchflossen wird. Die Sensorfläche 104 zum Beeinflussen des elektromagnetischen Wechselfelds 108 elektrisch leitfähig oder magnetisch. Die Sensorspule 102 und die Sensorfläche 104 sind beweglich zueinander angeordnet. Das Federelement 106 ist mit der Sensorspule 102 und der Sensorfläche 104 gekoppelt. Das Federelement 106 ist dazu ausgebildet, einer Relativbewegung 112 zwischen der Sensorfläche 104 und der Sensorspule 102 mit einer Federkraft 114 entgegenzuwirken. Wenn die Sensorspule 102 und die Sensorfläche 104 eine Relativbewegung 112 zueinander ausführen, ändert sich das elektromagnetische Wechselfeld 108. Durch die Änderung des Wechselfelds 108 ergibt sich eine Änderung 116 im Stromfluss 110 und/oder einer Spannung an der Sensorspule 102. Die Änderung 116 kann ausgewertet werden, um die Relativbewegung 112 messen zu können.

Mit anderen Worten zeigt Fig. 1 einen Wirbelstromsensor 100 zur Detektion von Kraft, Druck oder Beschleunigung beispielsweise in MEMS-Ausführung, also in Mikrosystemtechnik.

Das Grundprinzip des Wirbelstrommessverfahrens basiert auf der Induktionswirkung von Wirbelströmen, die in leitfähigen Prüfobjekten induziert erden. Hierbei wird eine Spule 102 mit Wechselstrom 110 gespeist, worauf sich ein Magnetfeld 108 um die Spule 102 ausbildet. Befindet sich ein elektrisch leitender Gegenstand 104 in diesem Magnetfeld 108, entstehen darin gemäß dem faradayschen Induktionsgesetz Wirbelströme. Die Wirbelströme sind ihrerseits von einem Magnetfeld 108 umgeben. Das Eigenfeld dieser Wirbelströme wirkt entsprechend der lenzschen Regel dem Feld 108 der Spule 102 entgegen, was eine Änderung 116 der Spulenimpedanz nach sich zieht. Diese abstandsabhängige Impedanzänderung 116 lässt sich durch Amplitudenänderung der Sensorspule 102 als messbare Größe messen. Das Verfahren ist bei allen elektrisch leitenden Materialien 104 einsetzbar. Da Wirbelströme Isolatoren ungehindert durchdringen, können sogar Metalle hinter einer isolierenden Schicht als Messobjekt 104 dienen.

Bei dem hier vorgestellten Ansatz wird eine Wirbelstromspule 102 (Wirbelstromprinzip) mit einem Gegenpart 104 eines mikromechanischen oder makroskopischen Sensors 100 zur Bestimmung einer Kraft, einem Druck oder einer Beschleunigung kombiniert. Je nach Ausführungsform kann das Sensorsignal 116 auch kontaktlos über z. B. induktive Kopplung ausgelesen werden. Die Wirbelstromspule 102 kann dabei z. B. im Leiterplatten-Design gefertigt werden. Anschließend können entweder die Spule 102 und die SensorFläche 104 in einen fixen Abstand zueinander positioniert werden, oder die Leiterplatte kann direkt auf den Sensor 100 aufgebracht werden.

Die Wirbelstromspule 102 kann direkt in einer Lage des MEMS Sensorelements 100 integriert werden. Vorteil dieser Variante ist ein sehr exakter Abstand von der Spule 102 zur beweglichen Sensorfläche 104. Hierbei ist eine Vielzahl von Sensorvarianten möglich, wobei erfindungsgemäß ein Differenzdrucksensor vorgeschlagen wird. Als Auswertesignal 116 kann nicht nur die Impedanz der Spule 102 betrachtet werden, sondern es besteht ferner die Möglichkeit, die Resonanzfrequenz des Schwingkreises zu bestimmen.
Durch den hier vorgestellten Ansatz kann ein Wirbelstromsensor 100 mit einem sehr simplen Aufbau realisiert werden. Die Spule 102 und die veränderte Position der leitfähigen Fläche 104, welche die Wirbelstromverluste induziert, müssen elektrisch nicht kontaktiert sein. Dadurch sind solche Sensoren 100 zu einem äußerst attraktiven Preis realisierbar. Mit den Wirbelstromsensoren 100 können sowohl sehr schnelle als auch sehr hoch auflösende Ausführungen realisiert werden. Im Vergleich zu Hall-Sensoren können z. B. deutlich größere Messbereiche, über 60 mm erreicht werden. Das Messsignal 116 des Wirbelstromsensors 100 ist unempfindlich gegen Schmutz, Staub, Feuchte, Öl. Ferner ist der Wirbelstromsensor 100 auch relativ störsicher im elektromagnetischen Umfeld. Im Vergleich zu kapazitiven Auswerteverfahren ist die Querempfindlichkeit gegenüber Feuchte gering. Ein Wirbelstromsensor 100 gemäß dem hier vorgestellten Ansatz zeigt charakteristische Merkmale wie eine Impedanzänderung (oder Frequenzverschiebung) bei einer Beschleunigung bzw. Druck- und Krafteinwirkung auf das Sensorelement 104.

Durch das hier vorgestellte neue Sensorkonzept auf Basis des Wirbelstromprinzips können Sensoren 100 für fast alle Applikationsbereiche bereitgestellt werden. Prinzipiell können kapazitive, resistive und viele hallbasierte Sensoren ersetzt werden, erfindungsgemäß jedoch die eine Differenzdrucksensor-Anwendung.

Fig. 2 zeigt ein Ablaufdiagramm eines Verfahrens 200 zum Messen einer Kraft gemäß einem Ausführungsbeispiel der vorliegenden Erfindung. Das Verfahren weist einen Schritt des Bereitstellens 202, einen Schritt des Beeinflussens 204, einen weiteren Schritt des Bereitstellens 206, einen Schritt des Erfassens 208 und einen Schritt des Ermittelns 210 auf. Das Verfahren 200 kann unter Verwendung eines Wirbelstromsensors, wie er in Fig. 1 beschrieben ist, ausgeführt werden. Im Schritt 202 des Bereitstellens wird ein elektromagnetisches Wechselfeld 108 mittels einer elektrisch leitfähigen Sensorspule bereitgestellt. Im Schritt 204 des Beeinflussens wird das elektromagnetische Wechselfeld 108 mittels einer Sensorfläche beeinflusst. Die Sensorspule und die Sensorfläche sind beweglich zueinander angeordnet. Im weiteren Schritt 206 des Bereitstellens wird eine Federkraft 114 entgegen einer Relativbewegung zwischen der Sensorspule und der Sensorfläche mittels einem Federelement bereitgestellt, das mit der Sensorspule und der Sensorfläche gekoppelt ist. Im Schritt 208 des Erfassens wird eine Veränderung 116 des elektromagnetischen Wechselfelds 108 erfasst. Im Schritt 210 des Ermittelns wird die Kraft unter Verwendung der Veränderung 116 ermittelt.

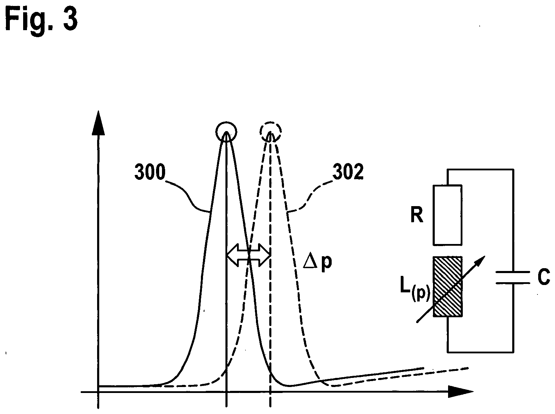

Fig. 3 zeigt ein Diagramm einer Verschiebung einer Resonanzfrequenz bei einer Änderung eines elektromagnetischen Wechselfelds gemäß einem Ausführungsbeispiel der vorliegenden Erfindung. Auf der Abszisse ist eine ansteigende Frequenz angetragen. Auf der Ordinate ist ein ansteigender Realteil eines Signals angetragen. In dem Diagramm sind ein erster Amplitudenverlauf 300 und ein zweiter Amplitudenverlauf 302 dargestellt. Die Amplitudenverläufe 300, 302 repräsentieren je einen realen Anteil eines Signalwerts während je eines Frequenzdurchlaufs in einem nebenstehend abgebildeten Reihenschwingkreis aus einer Kapazität C, einer Induktivität L₍ₚ₎ und einem Widerstand R. Die Induktivität L₍ₚ₎ entspricht dabei der Sensorspule aus dem Wirbelstromsensor gemäß dem hier vorgestellten Ansatz. Die Sensorspule verändert ihren Induktivitätswert ansprechend auf eine Lageänderung Δp der Sensorfläche. Bei geänderter Induktivität weist der Schwingkreis eine geänderte Resonanzfrequenz auf. In einem Frequenzbereich oberhalb und unterhalb der Resonanzfrequenz weist die Signalstärke einen starken Anstieg bis zu einem Maximum bei der Resonanzfrequenz auf. In Resonanz ist die Amplitude um ein Vielfaches höher als außerhalb des Frequenzbereichs. Durch ein Bestimmen der Resonanzfrequenz kann auf eine Lage der Sensorfläche, beispielsweise durch einen Druckeinfluss, relativ zu der Sensorspule geschlossen werden.

Die folgenden Figuren zeigen Schnittdarstellungen durch Wirbelstromsensoren gemäß verschiedenen Ausführungsbeispielen der vorliegenden Erfindung.

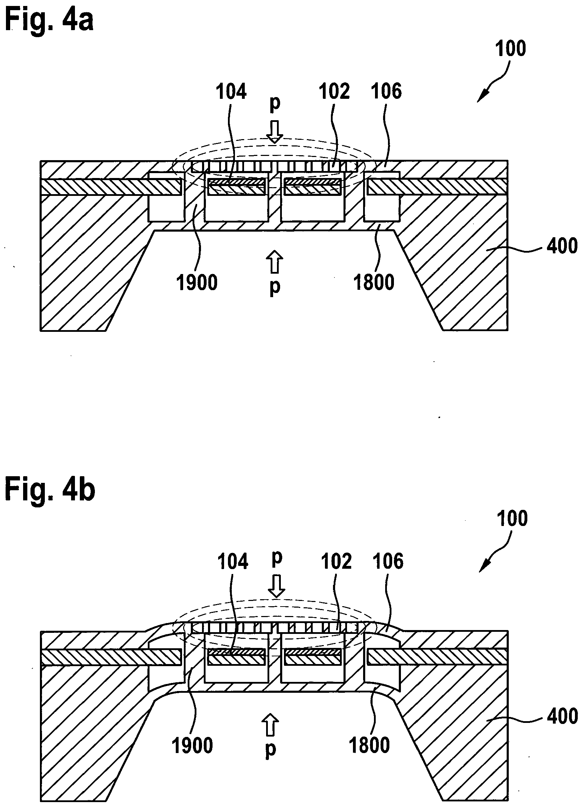

Die Figuren 4a und 4b zeigen schematische Abbildungen eines Wirbelstromsensors 100 als Differenzdrucksensor in Brückenbauart gemäß einem Ausführungsbeispiel der vorliegenden Erfindung in unbeaufschlagten Zustand und in beaufschlagtem Zustand. Der Wirbelstromsensor weist eine Sensorspule 102, eine Sensorfläche 104 und ein Federelement 106 sowie ein weiteres Federelement 1800 auf. In diesem Ausführungsbeispiel ist die Sensorfläche 104 starr ausgeführt. Die Sensorspule 102 ist mit dem Federelement 106 beweglich ausgeführt. Das Federelement 106 ist als eine obere Lage eines zusammengesetzten Federelements ausgeführt. Das weitere Federelement 1800 ist als untere Lage des zusammengesetzten Federelements ausgeführt. Die Sensorspule 102 ist in der oberen Lage 106 angeordnet. Zwischen den Lagen ist die Sensorfläche 104 angeordnet. Die obere Lage 106 ist mit der unteren Lage 1800 durch Brücken 1900 verbunden. Die Brücken 1900 fungieren als Stützelemente und sind in Durchbrüchen durch die Sensorfläche 104 angeordnet. Die Sensorspule 102 ist in einem Ausgangszustand von der Sensorfläche 104 um den Abstand d beabstandet. Die beiden Lagen des Federelements 106 sowie die Sensorfläche 104 sind in einem umlaufenden Gehäuse 400 abgestützt. Beide Lagen 106 weisen eine gleiche wirksame Fläche auf. Das Gehäuse 400 weist einen verlängerten Rand auf, an dessen Schmalseite die Schnittstelle zu einem Messpunkt angeordnet ist. Eine Innenseite des Rands ist abgeschrägt ausgeführt. Die Position der Spule 102 und der leitfähigen Schicht 104 kann vertauscht werden.

Fig. 4a zeigt den Wirbelstromsensor 100 in dem Ausgangszustand, in dem ein Druck p oberhalb des Federelements 106 gleich einem Druck p unterhalb des Federelements 1800 ist.

Fig. 4b zeigt den Wirbelstromsensor 100 in ausgelenktem Zustand, in dem der Druck p unterhalb des Federelements 1800 größer ist, als der Druck p oberhalb des Federelements 106. Das Federelement 106 ist mit der Sensorspule 102 in Richtung des niedrigeren Drucks p verschoben. Der Abstand d ist größer als im Ausgangszustand.

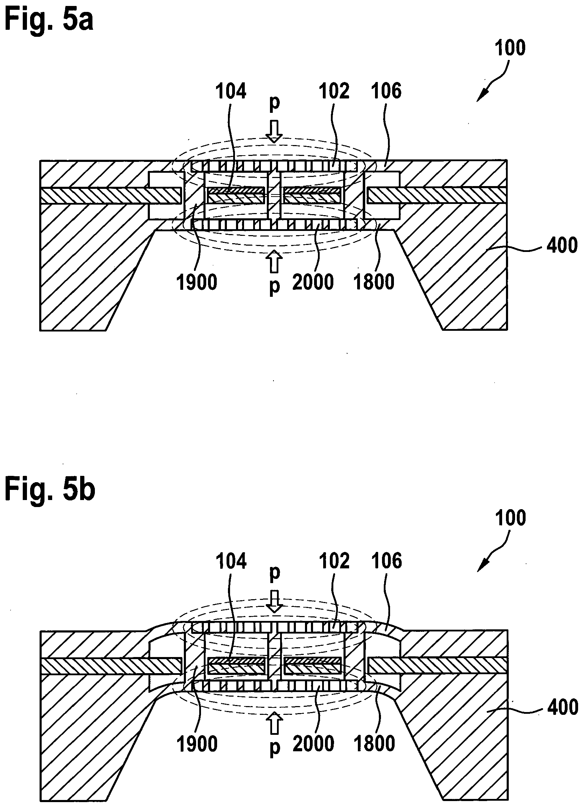

Die Figuren 5a und 5b zeigen schematische Abbildungen eines Wirbelstromsensors 100 als Differenzdrucksensor in Brückenbauart mit einer zweiten Sensorspule 2000 gemäß einem Ausführungsbeispiel der vorliegenden Erfindung in unbeaufschlagten Zustand und in beaufschlagtem Zustand. Der Wirbelstromsensor 100 entspricht der Beschreibung in den Figuren 4a und 4b. Zusätzlich weist der Wirbelstromsensor 100 die zweite Sensorspule 200 in dem unteren Federelement 1800 auf. Die Säulenvariante kann ebenfalls auch differenziell ausgelesen werden. Gezeigt ist eine Differenzial-Sensorik, d. h., eine Spule 106 befindet sich oberhalb und die andere Spule 2000 unterhalb der leitfähigen Schicht 102. Dadurch können Störeinflüsse, beispielsweise hervorgerufen durch einen Temperaturgang, kompensiert werden.

Fig. 5a zeigt den Wirbelstromsensor 100 in dem Ausgangszustand, in dem ein Druck p oberhalb der Lage 106 gleich einem Druck p unterhalb der Lage 1800 ist.

Fig. 5b zeigt den Wirbelstromsensor 100 in ausgelenktem Zustand, in dem der Druck p unterhalb des Federelements 800 größer ist, als der Druck p oberhalb des Federelements 106. Die Federelemente 106, 1800 sind mit den Sensorspulen 102, 2000 in Richtung des niedrigeren Drucks p verschoben. Der Abstand d ist größer als im Ausgangszustand.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

## Patentansprüche

1. Differenzdrucksensor zur Messung einer Druckdifferenz, der als ein Wirbelstromsensor (100) ausgeführt ist, mit folgenden Merkmalen:
einer elektrisch leitfähigen Sensorspule (102) zum Bereitstellen eines elektromagnetischen Wechselfelds (108);
einer Sensorfläche (104) zum Beeinflussen des elektromagnetischen Wechselfelds (108), wobei die Sensorspule (102) und die Sensorfläche (104) beweglich zueinander angeordnet sind; und
einem Federelement (106), das mit der Sensorspule (102) und der Sensorfläche (104) gekoppelt ist und dazu ausgebildet ist, einer Relativbewegung zwischen der Sensorfläche (104) und der Sensorspule (102) mit einer Federkraft (114) entgegenzuwirken, **dadurch gekennzeichnet, dass** die Sensorfläche (104) feststehend ausgeführt ist und die Sensorspule (102) dazu ausgebildet ist, die Relativbewegung in Abhängigkeit der Druckdifferenz auszuführen.

2. Differenzdrucksensor nach Anspruch 1, mit einer Auswertespule (900) zum Erfassen einer Resonanzfrequenz und/oder einer Güte eines die Sensorspule (102) umfassenden Sensorschwingkreises.

3. Differenzdrucksensor gemäß einem der vorangegangenen Ansprüche, bei dem die Sensorspule (102) elektrische Anschlüsse zum Erfassen einer Impedanz der Sensorspule aufweist.

4. Differenzdrucksensor gemäß einem der vorangegangenen Ansprüche, mit einer benachbart zu der Sensorspule (102) angeordneten Referenzspule (602) zum Bereitstellen eines Referenzfelds, und einer benachbart zu der Sensorfläche (104) angeordneten Referenzfläche (600) zum Beeinflussen des Referenzfelds, wobei die Referenzspule (602) und die Referenzfläche (600) starr zueinander angeordnet sind.

5. Differenzdrucksensor gemäß einem der vorangegangenen Ansprüche, mit einem Gehäuse (400), das eine Schnittstelle zum Befestigen des Differenzdrucksensors aufweist, wobei das Federelement (106), die Sensorfläche (104) und/oder die Sensorspule (102) in dem Gehäuse (400) angeordnet sind.

6. Differenzdrucksensor gemäß einem der vorangegangenen Ansprüche, bei dem zwischen der Sensorspule (102) und der Sensorfläche (104) ein Gel angeordnet ist.

7. Differenzdrucksensor gemäß einem der vorangegangenen Ansprüche, mit einer zweiten Sensorspule (2000), die starr mit der Sensorspule (102) gekoppelt.

## Claims

1. Differential pressure sensor for measuring a pressure difference, which differential pressure sensor is designed as an eddy current sensor (100), having the following features:
an electrically conductive sensor coil (102) for providing an electromagnetic alternating field (108);
a sensor surface (104) for influencing the electromagnetic alternating field (108), wherein the sensor coil (102) and the sensor surface (104) are arranged such that they can move in relation to one another; and
a spring element (106) which is coupled to the sensor coil (102) and to the sensor surface (104) and is designed to counteract a relative movement between the sensor surface (104) and the sensor coil (102) with a spring force (114), **characterized in that** the sensor surface (104) is of stationary design and the sensor coil (102) is designed to execute the relative movement depending on the pressure difference.

2. Differential pressure sensor according to Claim 1, comprising an evaluation coil (900) for detecting a resonant frequency and/or a quality factor of a sensor resonant circuit which comprises the sensor coil (102).

3. Differential pressure sensor according to either of the preceding claims, in which the sensor coil (102) has electrical connections for detecting an impedance of the sensor coil.

4. Differential pressure sensor according to one of the preceding claims, comprising a reference coil (602), which is arranged adjacent to the sensor coil (102), for providing a reference field, and comprising a reference surface (600), which is arranged adjacent to the sensor surface (104), for influencing the reference field, wherein the reference coil (602) and the reference surface (600) are arranged rigidly in relation to one another.

5. Differential pressure sensor according to one of the preceding claims, comprising a housing (400) which has an interface for fastening the differential pressure sensor, wherein the spring element (106), the sensor surface (104) and/or the sensor coil (102) are arranged in the housing (400).

6. Differential pressure sensor according to one of the preceding claims, in which a gel is arranged between the sensor coil (102) and the sensor surface (104).

7. Differential pressure sensor according to one of the preceding claims, comprising a second sensor coil (2000) which rigidly coupled to the sensor coil (102).

## Revendications

1. Capteur de pression différentielle destiné à mesurer une différence de pression, qui est réalisé sous la forme d'un capteur de courant de Foucault (100), comprenant les éléments caractéristiques suivants :
une bobine de détection électriquement conductrice (102) destinée à produire un champ électromagnétique alternatif (108) ;
une surface de détection (104) destinée à agir sur le champ électromagnétique alternatif (108), dans lequel la bobine de détection (102) et la surface de détection (104) sont disposées de manière à être mobiles l'une par rapport à l'autre ; et
un élément formant ressort (106) qui est couplé à la bobine de détection (102) et à la surface de détection (104) et est réalisé de manière à contrecarrer un mouvement relatif entre la surface de détection (104) et la bobine de détection (102) au moyen d'une force élastique (114), **caractérisé en ce que** la surface de détection (104) est réalisée de manière à être fixe et la bobine de détection (102) est réalisée de manière à exécuter le mouvement relatif en fonction de la différence de pression.

2. Capteur de pression différentielle selon la revendication 1, comprenant une bobine d'analyse (900) destinée à détecter une fréquence de résonnance et/ou un facteur de qualité d'un circuit oscillant de détection comprenant la bobine de détection (102).

3. Capteur de pression différentielle selon l'une quelconque des revendications précédentes, dans lequel la bobine de détection (102) comporte des bornes électriques destinées à détecter une impédance de la bobine de détection.

4. Capteur de pression différentielle selon l'une quelconque des revendications précédentes, comprenant une bobine de référence (602) destinée à produire un champ de référence, disposée de manière adjacente à la bobine de détection (102), et une surface de référence (600) destinée à agir sur le champ de référence, disposée de manière adjacente à la surface de détection (104), dans lequel la bobine de référence (602) et la surface de référence (600) sont disposées de manière rigide l'une par rapport à l'autre.

5. Capteur de pression différentielle selon l'une quelconque des revendications précédentes, comprenant un boîtier (400) qui comporte une interface permettant de fixer le capteur de pression différentielle, dans lequel l'élément formant ressort (106), la surface de détection (104) et/ou la bobine de détection (102) sont disposés dans le boîtier (400).

6. Capteur de pression différentielle selon l'une quelconque des revendications précédentes, dans lequel un gel est disposé entre la bobine de détection (102) et la surface de détection (104).

7. Capteur de pression différentielle selon l'une quelconque des revendications précédentes, comprenant une deuxième bobine de détection (2000) qui couplée de manière rigide à la bobine de détection (102).
